# EUROPÄISCHE PATENTSCHRIFT

(11) **EP 3 360 394 B1**
(45) Veröffentlichungstag und Bekanntmachung des Hinweises auf die Patenterteilung: **01.05.2024**
(21) Anmeldenummer: 16791315.1
(22) Anmeldetag: 10.10.2016
(51) Int. Cl.: H05B 41/02, F16L 101/18

(54) **AUSHÄRTEVORRICHTUNG MIT EINER UV-LICHT ERZEUGENDEN LAMPE**
CURING APPARATUS COMPRISING A LAMP GENERATING ULTRAVIOLET LIGHT
DISPOSITIF POUR DURCISSEMENT COMPRENANT UNE LAMPE À ULTRAVIOLETS

(30) Priorität: 08.10.2015 DE 102015117206
(43) Veröffentlichungstag der Anmeldung: 15.08.2018
(73) Patentinhaber: Trelleborg Sealing Profiles Germany GmbH, 63920 Großheubach (DE)
(72) Erfinder: SCHROPP, Klaus, 87477 Sulzberg (DE); VOGT, Jörg, 44879 Bochum (DE); REUTEMANN, Thomas, 87527 Sonthofen (DE)
(74) Vertreter: Schneiders & Behrendt Bochum
(86) Internationale Anmeldenummer: PCT/EP2016/074191
(87) Internationale Veröffentlichungsnummer: WO 2017/060523

(56) Entgegenhaltungen:
- EP-A1- 2 075 034
- EP-A1- 2 075 034
- EP-A1- 2 088 837
- WO-A1-95/29361
- WO-A1-95/29361
- WO-A1-2008/101499
- WO-A1-2008/101499

## Beschreibung

Die Erfindung betrifft eine Aushärtevorrichtung mit wenigstens einem UV-Modul, wobei das UV-Modul wenigstens eine UV-Lichtquelle zur Bestrahlung der Innenwand eines Rohres aufweist, wobei das in das Rohr eingebrachte UV-Modul über ein Kabel der Aushärtevorrichtung mit einer außerhalb des Rohres befindlichen Steuerungseinrichtung der Aushärtevorrichtung verbunden ist.

Es ist aus dem Stand der Technik bekannt, zur Sanierung von im Erdreich verlegten Rohren in das jeweilige Rohr einen so genannten Liner einzuziehen. Bei dem Liner handelt es sich um einen aus Fasermaterial bestehenden Schlauch, der mit einem durch UV-Licht härtbaren Harz getränkt ist. Der Liner wird nach dem Einziehen in das Rohr mittels Druckluft an die Innenwand des Rohres angepresst. Danach wird das Harz des Leiters ausgehärtet, indem eine Aushärtevorrichtung verwendet wird. Die Aushärtevorrichtung weist mehrere aneinandergekoppelte UV-Module auf, von denen jedes mit wenigstens einer UV-Lichtquelle ausgestattet ist. Die Kette aus UV-Modulen wird durch das mit dem Liner ausgekleidete Rohr hindurchgeführt. Das von den UV-Lichtquellen der UV-Module abgestrahlt UV-Licht bestrahlt die Innenwand des Rohres, wodurch das Harz ausgehärtet wird. Je nach Rohrdurchmesser werden UV-Lichtquellen unterschiedlicher Leistungen verwendet.

Bei den bekannten Aushärtevorrichtung (siehe z.B. DE 20 2005 020 431 U1) sind die in das Rohr eingebrachten UV-Module über ein Kabel mit einer außerhalb des Rohres, d.h. über Tage befindlichen Steuerungseinrichtung (meist in Form eines Schaltschrankes) verbunden. Jeder UV-Lichtquelle ist dabei ein darauf speziell abgestimmtes Betriebsgerät zugeordnet, das in der Steuerungseinrichtung verbaut ist. Bei den UV-Lichtquellen handelt es sich üblicherweise um Entladungslampen (z.B. Quecksilberdampflampen). Die Betriebsgeräte sind dazu eingerichtet, die Entladungslampen zu zünden und nach der Zündung den Betriebsstrom der Entladungslampen zu steuern. Da jeder UV-Lichtquelle, die sich in dem Rohr befindet, eins zu eins ein Betriebsgerät zugeordnet sein muss, umfasst das Kabel, das die Steuerungseinrichtung mit den UV-Modulen verbindet, eine Vielzahl von Adern als Stromversorgungsleitungen der einzelnen UV-Lichtquellen. Durch die leistungsstarken UV-Lichtquellen fließt ein hoher Betriebsstrom. Entsprechend müssen die Adern des Kabels einen großen Querschnitt aufweisen. Aus diesem Grund weist das Kabel insgesamt einen sehr großen Querschnitt auf. Daraus resultiert der Nachteil, dass die Kabellänge und damit die Länge eines jeweils am Stück sanierbaren Rohrleitungsabschnitts beschränkt ist. Aus Effizienz- und damit Kostengründen ist es jedoch wünschenswert, möglichst lange Rohrleitungsabschnitte am Stück sanieren zu können. Ein weiterer Nachteil der aus dem Stand der Technik bekannten Aushärtevorrichtungen ist, dass sich aufgrund der über die Stromversorgungsleitungen des Kabels fließenden hohen Ströme sehr hohe Leitungsverluste im Kabel ergeben.

Die EP 2 075 034 A1 befasst sich mit einem Bestrahlungssystem für Solarien.

Die EP 2 088 837 A1 offenbart eine Vorrichtung zum Betrieb einer UV-Entladungslampe, wobei eine elektronische Steuerung dazu ausgebildet ist, verschiedene Betriebsphasen zu kontrollieren, und eine Schnittstelle stellt einer übergeordneten Steuerung Daten zur weiteren Prozessbearbeitung zur Verfügung. Die EP 2 088 837 A1 betrifft auch ein Verfahren zum Betrieb einer UV-Lampe, wobei ein Umrichter eine bipolare Speisespannung erzeugt, wobei den Strom begrenzende Mittel vorgesehen sind. Der Umrichter wird vom Versorgungsnetz gespeist, und er erzeugt eine einstellbare bipolare Speisespannung mit wählbarer, einstellbarer Frequenz, wobei beides durch eine elektronische Steuerung vorgebbar ist.

Die WO 2008 / 101499 A1 betrifft eine Aushärtevorrichtung zum Aushärten von harzgetränkten Linern zum Zwecke der Rohrsanierung auf Basis von LEDs, die im sichtbaren Spektralbereich emittieren. Zum Einsatz kommt entsprechend ein Harz, das bei Bestrahlung mit Licht im sichtbaren Spektralbereich aushärtet.

Die WO 95/ 29 361 A1 betrifft eine Aushärtevorrichtung mit einem UV-Modul, wobei das UV-Modul eine UV-Lichtquelle zur Bestrahlung der Innenwand eines Rohres aufweist, wobei das in das Rohr eingebrachte UV-Modul mit einem Kabel verbunden ist, wobei das UV-Modul ein mit dem Kabel und der UV-Lichtquelle verbundenes Zündgerät aufweist. Eine Steuerung und Regelung der UV-Lichtquelle ist nicht vorgesehen.

Vor diesem Hintergrund ist es Aufgabe der Erfindung, eine Aushärtevorrichtung bereitzustellen, bei der das Kabel zur Verbindung der UV-Module mit der Steuerungseinrichtung einen gegenüber dem Stand der Technik reduzierten Querschnitt aufweisen kann. Dadurch sollen längere Rohrleitungsabschnitte am Stück sanierbar sein. Des Weiteren sollen die elektrischen Leitungsverluste im Kabel reduziert werden.

Diese Aufgabe löst die Erfindung ausgehend von einer Aushärtevorrichtung der eingangs genannten Art dadurch, dass an jedem UV-Modul wenigstens ein mit dem Kabel und der UV-Lichtquelle verbundenes Betriebsgerät angeordnet ist, wobei die Steuerungseinrichtung das Betriebsgerät über das Kabel zum Betrieb der UV-Lichtquelle ansteuert.

Die Besonderheit der erfindungsgemäßen Aushärtevorrichtung besteht darin, dass sich das der jeweiligen UV-Lichtquelle zugeordnete Betriebsgerät direkt am UV Modul, d.h. in dem zu sanierenden Rohr und damit in unmittelbarer Nähe der UV-Lichtquelle befindet. Es müssen daher keine langen Leitungsabschnitte zwischen Betriebsgerät und UV-Lichtquelle überbrückt werden. Das Kabel zur Verbindung der UV-Module mit der außerhalb des Rohres befindlichen Steuerungseinrichtung benötigt gegenüber dem Stand der Technik eine geringere Anzahl von Adern als Stromversorgungsleitungen, an die die einzelnen Betriebsgeräte angeschlossen sind. Die Stromversorgungsleitungen können mit höherer Spannung, z.B. mit Netzspannung, betrieben werden. Entsprechend sind die Leitungsverluste reduziert. Die einzelnen Adern des Kabels können somit einen geringeren Querschnitt aufweisen. Insgesamt kann somit der Querschnitt des Kabels gegenüber dem Stand der Technik signifikant reduziert werden. Entsprechend länger kann das Kabel sein, das z.B. mit einem Fahrzeug auf einer Kabeltrommel zu einer Baustelle / zu einem zu sanierenden Rohr transportiert wird. Die Erfindung ermöglicht in der Praxis Kabellängen von 500 m oder mehr.

Bevorzugt weist das Betriebsgerät der erfindungsgemäßen Aushärtevorrichtung eine Zündeinrichtung zum Zünden der als Entladungslampe ausgebildeten UV-Lichtquelle auf. Die Zündeinrichtung erzeugt eine hinreichend hohe Spannung, so dass die Entladungslampe zündet.

Weiterhin weist das Betriebsgerät eine Stromversorgungsschaltung auf, um den Betriebsstrom der UV-Lichtquelle, d.h. nachdem die Entladungslampen gezündet hat, entsprechend der Auslegung der Entladungslampe und entsprechend der gewünschten UV-Leistung zu steuern und/oder zu regeln.

Erfindungsgemäß weist das Kabel, das die UV-Module mit der außerhalb des Rohres befindlichen Steuerungseinrichtung verbindet, nicht nur zwei oder mehr Adern als Stromversorgungsleitung auf, wie zuvor erwähnt, sondern zusätzlich zwei oder mehr Adern als Datenleitung. An die Stromversorgungsleitung und die Datenleitung sind zwei oder mehr Betriebsgeräte der Aushärtevorrichtung, d.h. die Betriebsgeräte der einzelnen UV-Module und die Betriebsgeräte der UV-Lichtquellen, jeweils parallel angeschlossen. Das bedeutet, dass mehrere Betriebsgeräte an dieselben Adern der Stromversorgungsleitung bzw. der Datenleitung angeschlossen sind. Entsprechend wird gegenüber dem Stand der Technik eine geringere Anzahl von Adern benötigt.

Die Datenleitung wird genutzt, um die Betriebsgeräte der erfindungsgemäßen Aushärtevorrichtung anzusteuern. Durch die Datenleitung kann ein Datenbus in an sich bekannter Art und Weise realisiert werden. Über die Datenleitung erfolgt eine bidirektionale Kommunikation zwischen der Steuerungseinrichtung und den Betriebsgeräten, so dass die UV-Lichtquellen einzeln angesteuert und überwacht werden. Hierzu können die Betriebsgeräte z.B. jeweils eine serielle Datenschnittstelle, bevorzugt eine RS485-Schnittstelle, aufweisen, die die Adern der Datenleitung zur Datenübertragung zwischen Betriebsgerät und Steuerungseinrichtung nutzt.

Erfindungsgemäß weist das Betriebsgerät jeder UV-Lichtquelle einen mit der Stromversorgungsleitung verbundenen, eingangsseitigen Gleichrichter und einen mit dem Gleichrichter verbundenen, von einem Mikrokontroller angesteuerten Wechselrichter auf, der ausgangsseitig mit der UV-Lichtquelle verbunden ist. Das Betriebsgerät ist ähnlich wie ein Schaltnetzteil aufgebaut. Es erzeugt aus der an der Stromversorgungsleitung anliegenden Netzspannung die zum Betrieb der jeweiligen UV-Lichtquelle erforderliche Spannung und regelt den Betriebsstrom der UV-Lichtquelle. Die Betriebsstromregelung erfolgt mittels des Mikrokontrollers, der hierzu den Wechselrichter geeignet ansteuert. Der Betriebsstrom wird durch Frequenzvariation und/oder Pulsweitenmodulation gesteuert.

Bei einer bevorzugten Ausgestaltung ist der Wechselrichter des Betriebsgerätes ausgangsseitig mit einer Spannungsüberhöhungsschaltung verbunden, die abhängig von der Frequenz der Ausgangsspannung des Wechselrichters an den Anschlussklemmen der UV-Lichtquelle eine gegenüber der Betriebsspannung der UV-Lichtquelle überhöhte Zündspannung erzeugt. Zum Zünden der üblicherweise als UV-Lichtquellen eingesetzten Entladungslampen muss eine Zündspannung im Kilovoltbereich erzeugt werden. Dies ist möglich, beispielsweise indem ein Resonanzkreis bestehend aus einer Drossel und einem Kondensator ausgangsseitig mit dem Wechselrichter verbunden wird. Durch geeignetes Steuern der Frequenz des Wechselrichters wird der Resonanzkreis in der Nähe seiner Resonanzfrequenz betrieben, so dass in dem Resonanzkreis eine entsprechend hohe Spannung, die zum Zünden der Entladungslampe ausreicht, abfällt.

Weiter weisen die Betriebsgeräte der erfindungsgemäßen Aushärtevorrichtung zweckmäßig eine mit dem Mikrokontroller verbundene oder in diesen integrierte Strommesseinrichtung auf, die den durch die UV-Lichtquelle fließenden Strom misst. Dies ermöglicht es, mittels des Mikrokontrollers den Betriebsstrom zu regeln.

Bei einer bevorzugten Ausgestaltung der erfindungsgemäßen Aushärtevorrichtung ist das Kabel, das die UV-Module mit der außerhalb des Rohres befindlichen Steuerungseinrichtung verbindet, als Zugkabel ausgebildet, mit dem mehrere gleichartige, hintereinander aufgereihte und aneinandergekoppelte UV-Module durch das Rohr bewegbar sind. Die aneinandergekoppelten UV-Module werden mittels des Kabels langsam durch das Rohr gezogen. Dabei wird der harzgetränkte Liner in Bewegungsrichtung der UV-Module der Länge nach ausgehärtet.

Bei einer weiter bevorzugten Ausgestaltung der erfindungsgemäßen Aushärtevorrichtung weist jedes UV-Modul einen oder mehrere mit dem Betriebsgerät verbundene oder in dieses integrierte Temperaturfühler auf. Bei den Temperaturfühlern kann es sich z.B. um Infrarotsensoren handeln, die die Oberflächentemperatur an der Innenwand des Rohres messen.

Die Aushärtung des Kunstharzes, mit dem der Liner getränkt ist, erfolgt durch Polymerisation, die durch die UV-Strahlung ausgelöst wird. Die Polymerisation ist eine exotherme Reaktion, bei der Wärme frei wird, was zu einer Temperaturerhöhung an der Innenwand des Rohres führt. Der Temperaturanstieg darf nicht zu stark sein, da dies zu Überhitzung führen kann. Das Material des Liners oder sogar das Material des Rohres können schmelzen. Unter Umständen besteht auch die Gefahr eines Brandes. Zu einer Überhitzung kommt es, wenn die UV-Module zu langsam durch das Rohr gezogen werden. Dann erfolgt aufgrund der zu hohen UV-Intensität die Polymerisation zu schnell. Werden die UV-Module andererseits zu schnell durch das Rohr gezogen, reicht die UV-Intensität nicht aus, um eine vollständige Polymerisation zu bewirken. Die Aushärtung ist dann unvollständig. Die unvollständige Aushärtung kann daran erkannt werden, dass die Oberflächentemperatur an der Innenwand des Rohres zu schwach ansteigt.

Die mit dem Betriebsgerät verbundenen oder in dieses integrierten Temperaturfühler können gemäß der Erfindung dazu genutzt werden, die optimale Bewegungsgeschwindigkeit der UV-Module innerhalb des Rohres zu ermitteln. Die den hintereinander angeordneten UV-Modulen zugeordneten Temperaturfühler können benutzt werden, ein Temperaturprofil an der Innenwand des Rohres in Bewegungsrichtung der UV-Module aufzuzeichnen. Dieses Temperaturprofil gibt Auskunft über den Verlauf der Polymerisationsreaktion und kann somit genutzt werden, um die optimale Bewegungsgeschwindigkeit der UV-Module zu steuern (vgl. DE 198 17 413 C2). Dabei werden die gemessenen Oberflächentemperaturen zweckmäßig über die Datenschnittstellen der Betriebsgeräte an die außerhalb des Rohres befindliche Steuerungseinrichtung der erfindungsgemäßen Aushärtevorrichtung übertragen. Die Steuerungseinrichtung wertet die Temperaturdaten aus, und der Bediener ermittelt daraus die optimale Bewegungsgeschwindigkeit. Optional kann auch eine automatische Regelung der Bewegungsgeschwindigkeit realisiert werden.

Die Temperaturfühler der UV-Module können weiterhin genutzt werden, um die Umgebungstemperatur im Rohr zu ermitteln. Die UV-Lichtquellen und die elektronischen Komponenten der zugehörigen Betriebsgeräte sind für bestimmte Temperaturbereiche ausgelegt. Durch die Messung der Umgebungstemperatur kann festgestellt werden, dass die Aushärtevorrichtung innerhalb des zulässigen Temperaturbereichs betrieben wird.

Die Betriebsgeräte der erfindungsgemäßen Aushärtevorrichtung können eingerichtet sein, weitere Parameter zu erfassen, wie z.B. die Brennspannungen der Entladungslampen. Dadurch kann festgestellt werden, ob die Entladungslampen noch in Ordnung sind oder ausgetauscht werden müssen, weil sie ihre maximale Lebensdauer erreicht haben. Fotosensoren können verwendet werden, um die erzeugte UV-Lichtintensität zu messen. Zusätzlich können die Brennströme der Entladungslampen, Systemtemperaturen, Lufttemperaturen, Temperaturprofile, Lage (einschließlich Längs- und Querneigung) sowie Position des jeweiligen UV-Moduls mittels geeigneter Sensoren erfasst und die entsprechenden Daten über die Datenleitung kommuniziert werden. Alle diese Daten können zum Zwecke der Qualitätssicherung bei der Rohrleitungssanierung verwendet werden.

Ausführungsbeispiele der Erfindung werden im Folgenden anhand der Zeichnungen näher erläutert. Es zeigen:
- Figur 1:: schematische Darstellung einer erfindungsgemäßen Aushärtevorrichtung;
- Figur 2:: Schaltskizze eines erfindungsgemäßen Betriebsgerätes in einer ersten Ausgestaltung;
- Figur 3:: Schaltskizze eines erfindungsgemäßen Betriebsgerätes in einer zweiten Ausgestaltung.

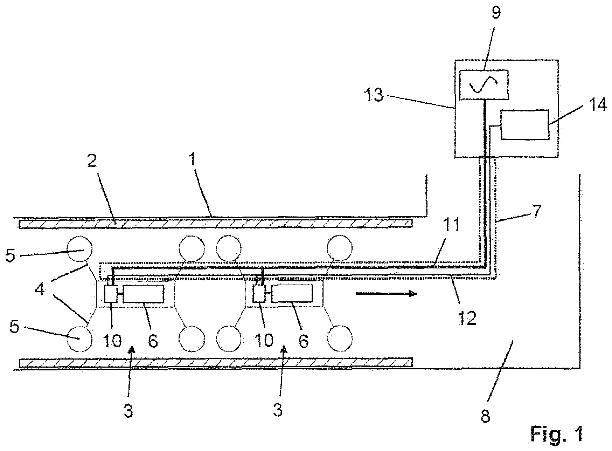

Die Figur 1 zeigt schematisch eine erfindungsgemäße Aushärtevorrichtung. Ein im Erdreich verlegtes Rohr 1 soll saniert werden. Hierzu wird ein Liner 2 in das Rohr eingezogen und mit Hilfe von Druckluft expandiert und an die Innenwand des Rohres 1 angelegt. Der Liner 2 ist mit Harz getränkt, das durch Bestrahlung mit UV-Licht aushärtbar ist.

Für die Aushärtung des Kunstharzes wird die erfindungsgemäße Aushärtevorrichtung verwendet. Diese umfasst, wie in Figur 1 dargestellt, mehrere gelenkig aneinandergekoppelte UV-Module 3, wobei jedes UV-Modul 3 an federnd aufgehängten Armen 4 angeordnete Räder oder Gleitkufen 5 aufweist, die zur Führung der Module 3 innerhalb des Rohres 2 dienen und eine Anpassung an unterschiedliche Rohrdurchmesser erlauben.

Jedes UV-Modul 3 weist eine UV-Lichtquelle 6 auf, bei der es sich um eine Entladungslampe (z.B. Quecksilberdampflampe) handelsüblicher Bauart handelt. Bei dem dargestellten Ausführungsbeispiel weist jedes UV-Modul 3 genau eine UV-Lichtquelle 6 auf. Je nach Anwendung können jedoch auch mehrere UV-Lichtquellen 6 pro UV-Modul 3 vorgesehen sein. Z.B. können mehrere UV-Lichtquellen 6 gleichmäßig über den Umfang verteilt an einem UV-Modul 3 angeordnet sein, um die Innenwand des Rohres 2 zu bestrahlen.

Die in das Rohr 2 eingebrachten UV-Module 3 sind über ein gemeinsames Kabel 7, das durch das Rohr 2 und durch einen Revisionsschacht 8 aus dem Rohr heraus an die Erdoberfläche geführt ist, mit einer außerhalb des Rohres 2 befindlichen Steuerungseinrichtung 9 verbunden.

Gemäß der Erfindung weist jedes UV-Modul 3 wenigstens ein Betriebsgerät 10 auf, das der entsprechenden UV-Lichtquelle 6 zugeordnet ist. Das Betriebsgerät 10 dient jeweils zum Zünden sowie zur Regelung des Betriebsstroms der UV-Lichtquelle 6. Jedes Betriebsgerät 10 ist über das Kabel 7 mit der Steuerungseinrichtung 9 verbunden. Über das Kabel 7 steuert die Steuerungseinrichtung 9 die Betriebsgeräte 10 der einzelnen UV-Lichtquellen 6 an. Zur Stromversorgung der UV-Lichtquellen 6 umfasst das Kabel 7 zwei oder mehr Adern, die eine Stromversorgungsleitung 11 bilden. Weiterhin umfasst das Kabel 7 zwei oder mehr Adern, die eine Datenleitung 12 bilden. Wie der Figur 1 zu entnehmen ist, sind die Betriebsgeräte 10 parallel mit der Stromversorgungsleitung 11 und der Datenleitung 12 verbunden. In der Steuerungseinrichtung 9 ist die Stromversorgungsleitung 11 mit einem Netzanschluss 13 verbunden, so dass die UV-Lichtquellen 6 entsprechend über die Betriebsgeräte 10 mit Energie versorgt werden. Die Datenleitung 12 ist mit einem Mikrocomputer 14 der Steuerungseinrichtung 9 verbunden. Die Betriebsgeräte 10 kommunizieren über die Datenleitung 12 bidirektional mit dem Mikrocomputer 14. Über die Datenleitung 12 steuert der Mikrocomputer 14 die Zündung der UV-Lichtquellen 6 und überwacht deren Betriebsparameter. Über die Datenleitung 12 werden außerdem Messdaten von optional vorgesehenen Sensoren (z.B. Temperatursensoren) der UV-Module 3 an den Mikrocomputer 14 übertragen, wo sie geeignet weiterverarbeitet werden.

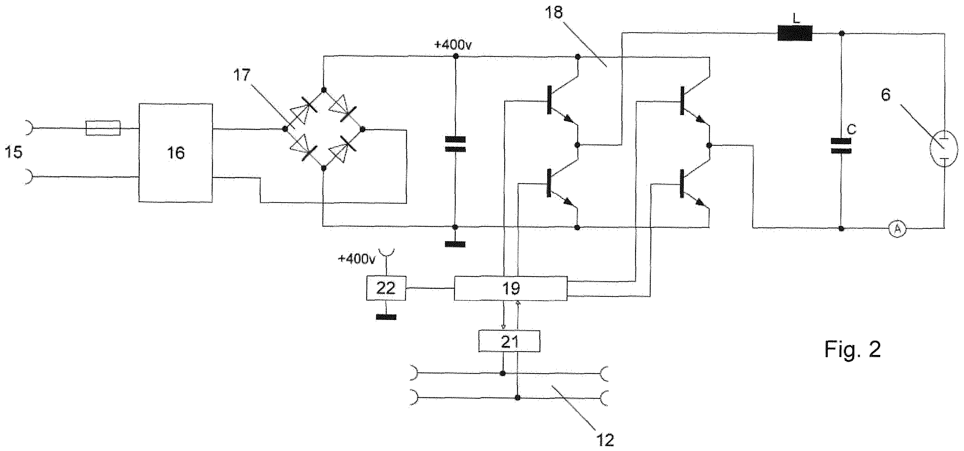

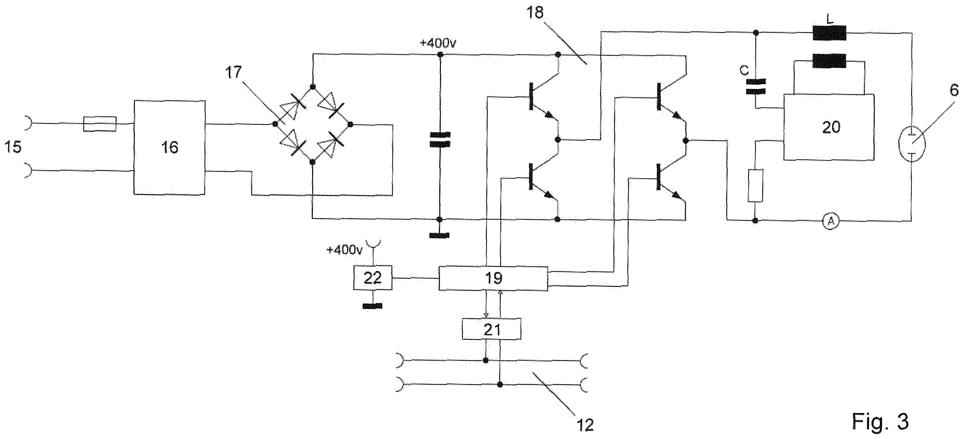

Die Figuren 2 und 3 zeigen Schaltskizzen von möglichen Ausführungsformen der in der Figur 1 dargestellten Betriebsgeräte 10. Über Klemmen 15 ist das Betriebsgerät 10 mit der Stromversorgungsleitung 11, d.h. mit dem Stromnetz verbunden. Die Netzspannung wird mittels eines Netzfilters 16 gefiltert und dann mittels eines Gleichrichters 17 in Gleichspannung umgewandelt. Der Gleichrichter 17 ist mit einem nachgeschalteten Wechselrichter 18 verbunden, der bei den dargestellten Ausführungsbeispielen jeweils durch eine H-Brückenschaltung mit vier Feldeffekttransistoren realisiert ist. Der Wechselrichter 18 ist an den Ausgängen der Brückenschaltung mit der die UV-Lichtquelle 6 bildenden Entladungslampe verbunden. Die Feldeffekttransistoren des Wechselrichters 18 werden von einem Mikrokontroller 19 des Betriebsgerätes 10 angesteuert, um die Betriebsspannung und den Betriebsstrom der UV-Lichtquelle 6 mittels Steuerung der Frequenz, mit der der Wechselrichter 18 betrieben wird, und/oder mittels Pulsweitenmodulation zu steuern bzw. zu regeln. Zur Zündung der UV-Lichtquelle 6 ist als Zündeinrichtung in der Figur 2 eine Spannungsüberhöhungsschaltung in Form eines Resonanzkreises vorgesehen, der durch eine Drossel L und einen Kondensator C gebildet ist. Zur Zündung wird der Wechselrichter 18 so angesteuert, dass die Drossel L und der Kondensator C in Resonanz sind. Die dabei über dem Kondensator C abfallende Spannung reicht für die Zündung der UV-Lichtquelle 6 aus. Abweichend davon enthält die Drossel L bei dem in Figur 3 dargestellten Ausführungsbeispiel eine zweite Wicklung. Eine Spannungsverdopplungsschaltung 20 lädt den Zündkondensator C mittels der anliegenden Wechselspannung. Wenn die Gleichspannung am Zündkondensator C die Zündspannung einer in der Spannungsverdopplungsschaltung enthaltenen Funkenstrecke überschreitet, zündet diese und entlädt den Kondensator C stoßartig über die zweite Wicklung der Drossel L. Die dadurch auftretende Hochspannung in der Drossel L zündet die UV-Lichtquelle 6. Nach der Zündung wird die Frequenz des Wechselrichters 18 mittels des Mikrokontrollers 19 geändert und der Betriebsstrom wird auf den gewünschten Sollwert geregelt. Hierzu ist in dem Stromkreis der UV-Lichtquelle 6 ein Strommesseinrichtung A vorgesehen, die mit dem Mikrokontroller 19 verbunden ist. Zur Einleitung des Zündvorgangs, zur Vorgabe des Sollwertes des Betriebsstroms und zur Übermittlung der sonstigen im Betriebsgerät 10 anfallenden Daten (Temperatur, Betriebsstrom, Betriebsspannung der UV-Lichtquelle 6 usw.), ist der Mikrocontroller 19 über eine Datenschnittstelle 21 (z.B. RS485) mit den Adern der Datenleitung 12 verbunden. Zur Stromversorgung des Mikrocontrollers 19 ist eine Stromversorgungsschaltung 22 vorgesehen, die mit gleichgerichteter Netzspannung betrieben wird.

Erfindungsgemäß kontrollieren die Betriebsgeräte 10 somit die Betriebsstromregelung und die Zündung der jeweiligen als UV-Lichtquellen 6 verwendeten Entladungslampen. Die Betriebsgeräte 10 sind unmittelbar an der jeweiligen UV-Lichtquelle 6 innerhalb des zugehörigen UV-Moduls 3 platziert. Mehrere Betriebsgeräte können parallel an die Adern des Kabels 7 angeschlossen werden. Daraus ergibt sich, dass das Kabel 7 eine geringere Anzahl von Adern mit außerdem gegenüber dem Stand der Technik geringerem Querschnitt aufweisen kann. Das Kabel 7 kann somit insgesamt einen gegenüber dem Stand der Technik deutlich reduzierten Querschnitt aufweisen. Das Resultat ist, dass eine Kabeltrommel, die bei den Rohrsanierungsarbeiten üblicherweise verwendet wird, ein wesentlich längeres Kabel 7 aufnehmen kann. Entsprechend können längere Rohrleitungsabschnitte am Stück saniert werden. Außerdem sind aufgrund der höheren Spannungen auf den Adern der Stromversorgungsleitung des Kabels 7 die Leitungsverluste gegenüber dem Stand der Technik geringer.

## Patentansprüche

1. Aushärtevorrichtung mit wenigstens einem UV-Modul (3), wobei das UV-Modul (3) wenigstens eine UV-Lichtquelle (6) zur Bestrahlung der Innenwand eines Rohres (1) aufweist, wobei das in das Rohr (1) eingebrachte UV-Modul (3) über ein Kabel (7) der Aushärtevorrichtung mit einer außerhalb des Rohres (1) befindlichen Steuerungseinrichtung (9) der Aushärtevorrichtung verbunden ist,
**dadurch gekennzeichnet,**
**dass** jedes UV-Modul (3) wenigstens ein mit dem Kabel (7) und der UV-Lichtquelle (6) verbundenes Betriebsgerät (10) der Aushärtevorrichtung aufweist, wobei die Steuerungseinrichtung (9) dazu eingerichtet ist, jedes Betriebsgerät (10) über das Kabel (7) zum Betrieb der UV-Lichtquelle (6) anzusteuern, wobei jedes Betriebsgerät (10) eine Stromversorgungsschaltung aufweist, die dazu ausgebildet ist, den Betriebsstrom der UV-Lichtquelle zu steuern oder zu regeln, wobei das Betriebsgerät (10) jeder UV-Lichtquelle (6) einen mit der Stromversorgungsleitung (11) verbundenen, eingangsseitigen Gleichrichter (17) und einen mit dem Gleichrichter (17) verbundenen, von einem Mikrokontroller (19) angesteuerten Wechselrichter (18) aufweist, der ausgangsseitig mit der UV-Lichtquelle (6) verbunden ist, wobei das Kabel (7) zwei oder mehr Adern als Stromversorgungsleitung (11) sowie zwei oder mehr weitere Adern als Datenleitung (12) umfasst, wobei an die Stromversorgungsleitung (11) und die Datenleitung (12) zwei oder mehr Betriebsgeräte (10) parallel angeschlossen sind, wobei über die Datenleitung (12) eine bidirektionale Kommunikation zwischen der Steuerungseinrichtung (9) und den Betriebsgeräten (10) erfolgt, um die UV-Lichtquellen (6) einzeln anzusteuern und zu überwachen.

2. Aushärtevorrichtung nach Anspruch 1, **dadurch gekennzeichnet, dass** jedes Betriebsgerät (10) eine Zündeinrichtung zum Zünden der als Entladungslampe ausgebildeten UV-Lichtquelle (6) aufweist.

3. Aushärtevorrichtung nach einem der vorhergehenden Ansprüche, **dadurch gekennzeichnet, dass** die Betriebsgeräte jeweils (10) eine serielle Datenschnittstelle (21), bevorzugt eine RS 485 Schnittstelle, aufweisen, die dazu eingerichtet ist, die Adern der Datenleitung(12) zur Datenübertragung zwischen Betriebsgerät (10) und Steuerungseinrichtung (9) zu nutzen.

4. Aushärtevorrichtung nach einem der vorhergehenden Ansprüche, **dadurch gekennzeichnet, dass** der Wechselrichter (18) ausgangsseitig mit einer Spannungsüberhöhungsschaltung (L, C) verbunden ist, wobei die Spannungsüberhöhungsschaltung (L, C) dazu eingerichtet ist, abhängig von der Frequenz der Ausgangsspannung des Wechselrichters (18) am Eingang der UV-Lichtquelle (6) eine gegenüber einer Betriebsspannung der UV-Lichtquelle (6) überhöhte Zündspannung zu erzeugen.

5. Aushärtevorrichtung nach einem der vorhergehenden Ansprüche, **dadurch gekennzeichnet, dass** der Wechselrichter (18) ausgangsseitig mit einer Spannungsüberhöhungs-schaltung (20) verbunden ist, wobei die Spannungsüberhöhungsschaltung (20) dazu eingerichtet ist, durch stoßartiges Entladen eines Kondensators (C) über eine Zusatzwicklung einer ausgangsseitig mit dem Wechselrichter (18) verbundenen Drossel (L) an der UV-Lichtquelle (6) eine gegenüber einer Betriebsspannung der UV-Lichtquelle (6) überhöhte Zündspannung zu erzeugen.

6. Aushärtevorrichtung nach einem der vorhergehenden Ansprüche, **dadurch gekennzeichnet, dass** das Betriebsgerät (10) eine mit dem Mikrokontroller (19) verbundene oder in diesen integrierte Strommesseinrichtung (A) aufweist, wobei die Strommesseinrichtung (A) dazu ausgebildet ist, den durch die UV-Lichtquelle (6) fließenden Strom zu messen.

7. Aushärtevorrichtung nach einem der Ansprüche 1 bis 6, **dadurch gekennzeichnet, dass** das Kabel (7) als Zugkabel ausgebildet ist, mit dem mehrere gleichartige, hintereinander aufgereihte und aneinander gekoppelte UV-Module (3) durch das Rohr (1) bewegbar sind.

8. Aushärtevorrichtung nach einem der Ansprüche 1 bis 7, **dadurch gekennzeichnet, dass** jedes UV-Modul (3) einen oder mehrere mit dem Betriebsgerät (10) verbundene oder in dieses integrierte Temperaturfühler aufweist.

9. Aushärtevorrichtung nach Anspruch 8, **dadurch gekennzeichnet, dass** die Temperaturfühler dazu eingerichtet sind, die Oberflächentemperatur an der Innenwand des Rohres (1) zu messen.

10. Aushärtevorrichtung nach einem der Ansprüche 4 bis 9, **dadurch gekennzeichnet, dass** jedes Betriebsgerät (10) weitere mit dem Mikrokontroller (19) verbundene oder in diesen integrierte Sensoren aufweist, und zwar einen Fotosensor, um die erzeugte UV-Lichtintensität zu messen, einen Temperatursensor zur Messung der Systemtemperatur des jeweiligen UV-Moduls (3) oder der Lufttemperatur in der Umgebung des UV-Moduls (3), einen Lagesensor zur Erfassung der Längs- und Querneigung des UV-Moduls (3), und/oder einen Positionssensor zur Erfassung der Position des jeweiligen UV-Moduls im Rohr (1).

## Claims

1. A curing apparatus having at least one UV module (3), wherein the UV module (3) has at least one UV light source (6) for irradiating the inner wall of a pipe (1), wherein the UV module (3) that has been introduced into the pipe (1) is connected, by means of a cable (7) of the curing apparatus, to a control device (9) of the curing apparatus that is situated outside of the pipe (1),
**characterized in**
**that** each UV module (3) has at least one operating appliance (10) of the curing device connected to the cable (7) and the UV light source (6), the control device (9) being set up to control each operating appliance (10) via the cable (7) for operating the UV light source (6), each operating appliance (10) having a power supply circuit which is designed to control or regulate the operating current of the UV light source (6), wherein the operating appliance (10) of each UV light source (6) has an input-side rectifier (17) connected to the power supply line (11) and an inverter (18) connected to the rectifier (17) and controlled by a microcontroller (19), wherein the inverter (18) is connected on the output side to the UV light source, the cable (7) comprising two or more wires as a power supply line (11) and two or more further wires as a data line (12), two or more operating appliances (10) being connected in parallel to the power supply line (11) and the data line (12), wherein via the data line (12) a bidirectional communication between the control device (9) and the operating appliances (10) takes place in order to control and monitor the UV light sources (6) individually.

2. The curing apparatus according to claim 1, **characterized in that** each operating appliance (10) has an ignition device for igniting the UV light source (6) that is embodied as a discharge lamp.

3. The curing apparatus according to any one of the preceding claims, **characterized in that** the operating appliances (10) each have a serial data interface (21), preferably an RS 485 interface, which is set up for using the wires of the data line (12) for data transfer between operating appliance (10) and control device (9).

4. The curing apparatus according to any one of the preceding claims, **characterized in that** the inverter (18) is connected on the output side to a voltage overshoot circuit (L, C), the voltage overshoot circuit (L, C) is set up, depending on the frequency of the output voltage of the inverter (18) at the input of the UV light source (6), to generate an ignition voltage which is excessive compared to an operating voltage of the UV light source (6).

5. The curing apparatus according to any one of the preceding claims, **characterized in that** the inverter (18) is connected on the output side to a voltage overshoot circuit (20), the voltage overshoot circuit (20) is set up, by shock discharge of a capacitor (C) via an additional winding of a choke (L) connected to the output of the inverter (18), to generate an ignition voltage which is excessive compared to an operating voltage of the UV light source (6).

6. The curing apparatus according to any one of the preceding claims, **characterized in that** the operating appliance (10) has a current measuring device (A) that is connected to, or integrated in, the microcontroller (19), said current measuring device is set up for measuring the current flowing through the UV light source (6).

7. The curing apparatus according to any one of claim 1 to 6, **characterized in that** the cable (7) is embodied as a pull cable, by means of which a plurality of similar UV modules (3) that are strung in succession and coupled to one another are movable through the pipe (1).

8. The curing apparatus according to any one of claim 1 to 7, **characterized in that** each UV module (3) has one or more temperature detectors that are connected to, or integrated in, the operating appliance (10).

9. The curing apparatus according to claim 8, **characterized in that** the temperature detectors are set up to measure the surface temperature of the inner wall of the pipe (1).

10. The curing apparatus according to any one of claim 4 to 9, **characterized in that** each operating appliance (10) has further sensors that are connected to, or integrated in, the microcontroller (19), to be precise a photosensor for measuring the produced UV light intensity, a temperature sensor for measuring the system temperature of the respective UV module (3) or the air temperature in the surroundings of the UV module (3), a spatial orientation sensor for capturing the longitudinal or transverse tilt of the UV module (3), and/or a position sensor for capturing the position of the respective UV module in the pipe (1).

## Revendications

1. Dispositif de durcissement comprenant au moins un module UV (3), dans lequel le module UV (3) comprend au moins une source de lumière UV (6) pour irradier la paroi intérieure d'un tube (1), le module UV (3) introduit dans le tube (1) est relié, par l'intermédiaire d'un câble (7) du dispositif de durcissement, à un dispositif de commande du dispositive de durcissement situé à l'extérieur du tube,
**caractérisé en ce que**
chaque module UV (3) comporte au moins un appareil de fonctionnement (10) du dispositif de durcissement raccordé au câble (7) et à la source de lumière UV (6), le dispositif de commande (9) étant agencé pour commander chaque appareil de fonctionnement (10) par l'intermédiaire du câble (7) pour faire fonctionner la source de lumière UV (6), chaque appareil de fonctionnement (10) comprenant un circuit d'alimentation en courant conçu pour commander ou réguler le courant de fonctionnement de la source de lumière UV, l'appareil de fonctionnement (10) de chaque source de lumière UV (6) étant équipé d'un redresseur d'entrée, qui est relié à la ligne d'alimentation électrique (11), et comportant un onduleur (18) relié au redresseur (17), qui est commandé par un microcontrôleur (19) et relié à la source de lumière UV (6) du côté de la sortie, le câble (7) comportant deux ou plusieurs conducteurs en tant que ligne d'alimentation électrique (11) ainsi que deux ou plusieurs autres conducteurs en tant que ligne de données (12), dans lequel deux ou plusieurs appareils de fonctionnement (10) sont connectés en parallèle à la ligne d'alimentation en courant (11) et la ligne de données (12), une communication bidirectionnelle étant établie via la ligne de données (12) entre le dispositif de commande (9) et les appareils de fonctionnement (10) afin de commander et de surveiller individuellement les sources de lumière UV (6).

2. Dispositif de durcissement selon la revendication 1, **caractérisé, en ce que** chaque appareil de fonctionnement (10) comporte un dispositif d'allumage pour l'allumage de la source de lumière UV (6) conçue comme une lampe à décharge.

3. Dispositif de durcissement selon l'une quelconque des revendications précédentes, **caractérisé en ce que** les appareils de fonctionnement (10) ont chacun une interface sérielle interface de données (21), de préférence une interface RS 485, destinée à utiliser les conducteurs de la ligne de transmission de données (12) pour la transmission de données entre l'appareil de fonctionnement et l'appareil à commande.

4. Dispositif de durcissement selon l'une quelconque des revendications précédentes, **caractérisé en ce que** l'onduleur (18) est relié en sortie à un circuit de surélévation de tension (L, C), le circuit de surélévation de tension (L, C) étant conçu pour générer, en fonction de la fréquence de la tension de sortie de l'onduleur (18) à l'entrée de la source de lumière UV (6), une tension d'allumage surélevée par rapport à une tension de service de la source de lumière UV (6).

5. Dispositif de durcissement selon l'une des revendications précédentes, **caractérisé en ce que** l'onduleur (18) est relié en sortie à un circuit de surélévation de tension (20), le circuit de de surélévation de tension (20) étant conçu pour être utilisé par un courant de choc décharge d'un condensateur (C) par l'intermédiaire d'un enroulement supplémentaire d'une papillon (L) relié au sortie de l'onduleur (18) générer à la source de lumière UV (6) une tension d'allumage qui est surélevée par rapport à une tension de fonctionnement de la source de lumière UV (6).

6. Dispositif de durcissement selon l'une des revendications précédentes, **caractérisé par le fait que** l'appareillage de fonctionnement (10) comprend un dispositif de mesure de l'électricité (A) connecté ou intégré à un microcontrôleur (A), le dispositif de mesure de l'électricité (A) mesurer le courant traversant la source de lumière UV (6).

7. Dispositif de durcissement selon l'une des revendications 1 à 6, **caractérisé en ce que** le câble (7) est conçu comme un câble de traction, avec lequel plusieurs modules UV (3) de même type, alignés les uns derrière les autres et couplés les uns aux autres, peuvent être déplacés à travers le tube (1).

8. Dispositif de durcissement selon l'une quelconque des revendications 1 à 7, **caractérisé en ce que** chaque module UV (3) comprend une ou plusieurs capteur de température relié ou intégré à l'appareil de fonctionnement (10).

9. Dispositif de durcissement selon la revendication 8, **caractérisé en ce que** les capteurs de température sont adaptés pour mesurer la température de surface sur la paroi intérieure du tube (1).

10. Dispositif de durcissement selon l'une des revendications 4 à 9, **caractérisé en ce que** chaque appareil de fonctionnement (10) comporte d'autres capteurs reliés au microcontrôleur (19) ou intégrés dans celui-ci, à savoir un photocapteur pour mesurer l'intensité de la lumière UV générée, un capteur de température pour mesurer la température du système du module UV (3) concerné ou la température de l'air dans l'environnement du module UV (3), un capteur de position pour détecter l'inclinaison longitudinale et transversale du module UV (3), et/ou un capteur de position pour détecter la position du module UV respectif dans le tube (1).
